Europäisches Patentamt

European Patent Office

Office européen des brevets

(19)

(11) Numéro de publication: **0 162 749**
**B1**

(12) **FASCICULE DE BREVET EUROPEEN**

(45) Date de publication du fascicule du brevet:
**22.06.88**

(21) Numéro de dépôt: **85400775.4**

(22) Date de dépôt: **18.04.85**

(51) Int. Cl.⁴: **F 16 D  65/60,** F 16 D  65/50,
B 60 T  7/08

(54) Dispositif de commande d'un organe tel qu'un frein de stationnement d'un véhicule.

(30) Priorité: **26.04.84  FR 8406608**

(43) Date de publication de la demande:
**27.11.85 Bulletin 85/48**

(45) Mention de la délivrance du brevet:
**22.06.88 Bulletin 88/25**

(84) Etats contractants désignés:
**DE GB IT**

(56) Documents cités:
**FR - A - 542 333**
**FR - A - 610 413**
**FR - A - 628 826**
**FR - A - 909 132**
**FR - A - 1 124 188**
**US - A - 1 764 937**
**US - A - 1 848 678**
**US - A - 2 922 317**
**US - A - 3 136 177**
**US - A - 4 138 905**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Gillet, Guy, 16 Route de Bréançon, F-95640 Marines (FR)**

(74) Mandataire: **Polus, Camille et al, c/o Cabinet Lavoix 2, Place d'Estienne d'Orves, F-75441 Paris Cedex 09 (FR)**

EP 0 162 749 B1

## Description

La présente invention est relative à un dispositif de commande d'un organe tel qu'un frein de stationnement d'un véhicule, comportant (FR-A-610413) un levier de manœuvre pouvant pivoter sur un axe fixe et qui exerce dans un sens de pivotement, une traction sur un câble relié à l'organe à actionner, une came susceptible de pivoter autour du même axe que le levier de manœuvre et maintenue élastiquement en appui sur le levier par un organe précontraint, les faces d'appui de la came et du levier comportant des reliefs complémentaires formant des dents de scie réparties annulairement autour de l'axe de pivotement, propres à accoupler positivement la came au levier quand celui-ci pivote dans le sens provoquant la tension du câble.

L'accrochage d'un câble tangentiellement à une came est connu en soi par le US-A-3136777.

Le levier pouvant osciller d'une fraction d'un tour entre une position de repos et une position active, la commande doit être réglée de manière qu'en position de repos du levier le câble n'exerce pas de traction sur l'organe à actionner, ni ne présente du mou risquant de provoquer du bruit et une perte de course utile au début de la manœuvre du levier.

A cet effet, un réglage s'effectue en ajustant la longueur du câble ou d'une gaine dans laquelle il coulisse, notamment au droit d'un appui sur une partie fixe, ou bien en utilisant un mécanisme intégré ou lié à l'organe à actionner. Dans la plupart des cas, en particulier quand il s'agit d'une commande de frein de véhicule, ledit réglage est délicat à effectuer à cause d'une mauvaise accessibilité au câble ou au mécanisme, et celui-ci s'avère relativement compliqué, et par suite coûteux et/ou de fiabilité douteuse lorsqu'il est agencé pour rattraper automatiquement le mou du câble.

C'est pourquoi, afin de pallier ces inconvénients l'invention a pour objet un dispositif du genre ci-dessus comportant un moyen de réglage simple et accessible pour effectuer le rattrapage, éventuellement automatique, du mou du câble.

Selon l'invention, le dispositif comporte les caractéristiques mentionnées aux revendications annexées 1, 2 et 3.

Le dispositif conforme à l'invention présente notamment l'avantage, par rapport au FR-A-610413, de ne nécessiter qu'un seul ressort au lieu de deux et est donc plus simple.

En effet, dans le FR-A-610413, un premier ressort exerce une poussée axiale sur une pièce reliée au câble, par l'intermédiaire d'une pièce crantée coulissante, et un second ressort assure le rappel angulaire de la pédale.

Par contre, dans le dispositif selon l'invention, un unique ressort en appui axial direct sur la came et sur le support fixe exerce la poussée axiale, et assure le rappel angulaire de la pédale, par accrochage de ses deux extrémités respectivement à la came et au support.

Un exemple non limitatif de réalisation d'un dispositif de commande selon l'invention est décrit ci-après, en référence aux dessins annexés sur lesquels:

la fig. 1 est une vue en élévation d'un dispositif selon l'invention avec coupe partielle suivant la ligne I-I de la fig. 2, et

la fig. 2 est une vue en coupe partielle suivant la ligne II-II de la fig. 1.

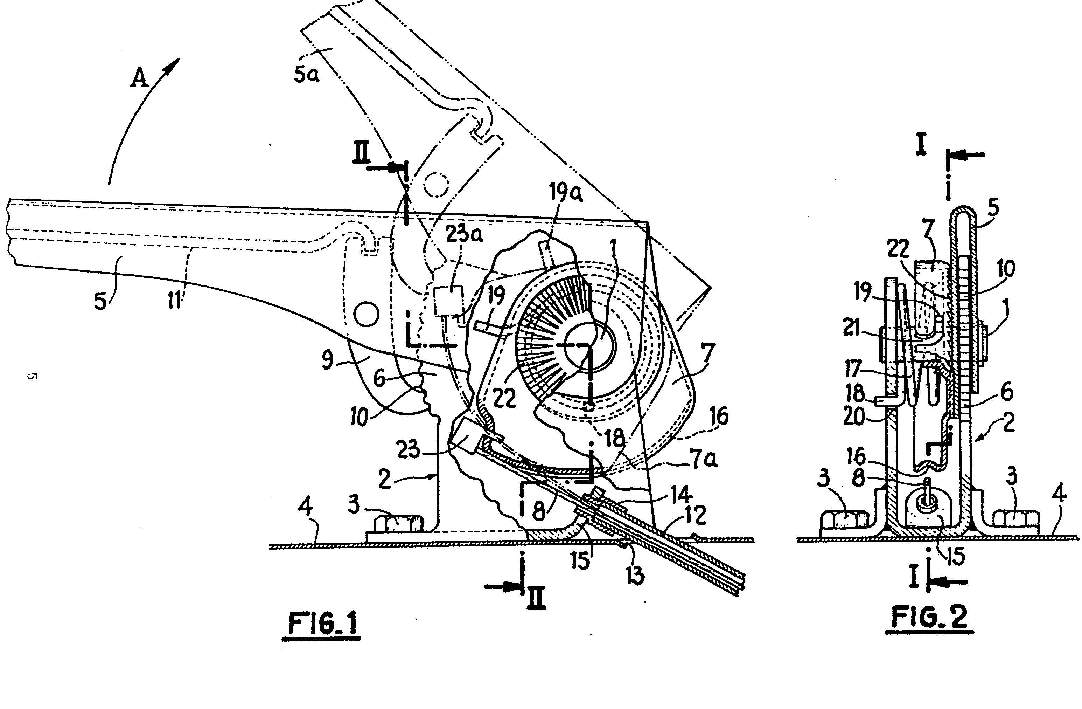

On voit sur les fig. 1 et 2, pivotant autour d'un axe 1 solidaire d'un support 2 en U fixé par trois vis 3 sur un plancher 4 de véhicule, un levier de manœuvre 5 qui chevauche l'une 6 des deux ailes du support 2 en U, et une came 7 à laquelle est accroché tangentiellement un câble 8 relié, de façon non représentée, à un frein de stationnement du véhicule.

Le levier 5 contient, de manière classique, un cliquet 9 qui coopère d'un côté avec une denture 10 de l'aile 6, et de l'autre côté avec une tige 11 reliée à un ressort et à un bouton-poussoir non visibles, et qui assure le maintien angulaire du levier 5 entre une position de repos où il est représenté en traits pleins et une position active 5a où il est représenté en traits fins mixtes.

Le câble 8 est entouré d'une gaine 12 qui traverse le plancher 4 par une ouverture 13 et qui bute par un embout 14 contre une patte 15 du support 2.

Sur une portion sensiblement circulaire de la périphérie de la came 7, est agencée une gorge 16 propre à recevoir le câble 8 lors du pivotement de la came 7. Celle-ci est maintenue en appui axial sur le levier 5 par un ressort hélicoïdal 17 qui entoure l'axe 1 et dont les deux extrémités 18, 19 sont respectivement accrochées l'une dans un trou 20 du support 2, l'autre dans une encoche 21 de la came 7. Les faces d'appui de la came 7 et du levier 5 sont perpendiculaires à l'axe 1 et munies de reliefs complémentaires 22 en forme de dents de scie radiales réparties annulairement autour de l'axe 1. La section de ces dents est telle que l'accouplement de la came 7 au levier 5 est positif lorsque celui-ci l'entraîne en pivotant dans le sens A correspondant à la tension du câble 8, donc à l'actionnement du frein, et lorsque le câble 8 tendu par le frein ramène le levier 5 en position de repos.

Par ailleurs, le ressort 17 est précontraint au montage, dans le sens de son enroulement, de manière que son extrémité 19 exerce sur la came 7 une force tangentielle qui tend à la faire tourner dans le sens A, cette force étant suffisante pour provoquer éventuellement un rattrapage du mou du câble 8 quand le levier 5 est en position de repos. Ladite force tangentielle fait alors tourner la came 7 en l'écartant du levier 5, grâce à la pente des dents de scie 22, à l'encontre de la poussée axiale du ressort 17, jusqu'à une nouvelle position angulaire relative entre la came 7 et le levier 5, position dans laquelle apparaît une légère tension du câble 8, supprimant son mou. Dans cette position, la came 7 et le levier 5 sont de nouveau accouplés par les reliefs 22 en dents de scie de leurs faces respectives en appui.

Ainsi, par la suite de plusieurs rattrapages de mou du câble 8, la came 7 passe progressivement, le levier 5 étant considéré dans sa position de repos, d'une position initiale où elle est représentée en traits pleins ainsi que l'embout de câble 23 et l'extrémité de ressort 19 qui y sont accrochés, à une position où la came 7 et lesdits embout et extrémité sont représentés en traits mixtes et repérés 7a, 23a et 19a.

Dans une variante plus simple, re ressort 17 qui assure la poussée axiale de la came 7 sur le levier 5, n'est pas accroché par ses extrémités 18, 19 au support et à la came. Le rattrapage du mou du câble 8 s'effectue alors non pas automatiquement comme indiqué précédemment, mais par un réglage angulaire relatif entre la came 7 et le levier 5, en immobilisant le levier dans sa position de repos et en faisant tourner la came dans le sens A, par exemple au moyen d'une broche amovible engagée dans un trou approprié de la came 7 jusqu'à tendre légèrement le câble 8. Ce mouvement relatif entraîne, comme dans le cas précédent, un écartement axial entre la came 7 et le levier 5 grâce au profil incliné des dents 22.

Les dispositifs décrits ci-dessus sont particulièrement peu encombrants, et leur bonne accessibilité, au droit du levier de manœuvre, rend aisés leur montage et leurs réglages éventuels.

## Revendications

1. Dispositif de commande d'un organe tel qu'un frein de stationnement d'un véhicule, comportant un levier de manœuvre (5) pouvant pivoter sur un axe fixe (1) et qui exerce dans un sens de pivotement (A), une traction sur un câble (8) relié à l'organe à actionner, une came (7) susceptible de pivoter autour du même axe (1) que le levier (5) de manœuvre et maintenue élastiquement en appui sur le levier (5) par un organe précontraint, les faces d'appui de la came (7) et du levier (5) comportant des reliefs complémentaires (22) formant des dents de scie réparties annulairement autour de l'axe de pivotement (1), propres à accoupler positivement la came (7) au levier (5) quand celui-ci pivote dans le sens (A) provoquant la tension du câble (8), caractérisé en ce que le câble (8) étant accroché tangentiellement à la came (7), celle-ci est maintenue élastiquement en appui axial sur le levier (5) au moyen d'un ressort entourant l'axe de pivotement (1), les extrémités du ressort s'appuyant l'une sur le support fixe (2) et l'autre sur la came (7).

2. Dispositif selon la revendication 1, caractérisé en ce que les deux extrémités du ressort (17) sont accrochées l'une (18) à un support (2) fixe, l'autre (19) à la came (7) de manière que le ressort (17) tende à faire tourner cette dernière dans le sens provoquant la tension du câble (8).

3. Dispositif selon la revendication 1, caractérisé en ce que la came (7) est munie d'un trou permettant l'engagement d'une broche afin de provoquer un déplacement angulaire de la came jusqu'à une position où le câble (8) est tendu quand le levier est en position de repos.

## Patentansprüche

1. Bedienungsvorrichtung für eine Einrichtung, wie eine Feststellbremse eines Fahrzeugs, mit einem Betätigungshebel (5), welcher auf einer festen Achse (1) schwenken kann und in einem Schwenksinne (A) einen Zug auf ein Kabel (8) ausübt, das mit der zu betätigenden Einrichtung verbunden ist, einem um die gleiche Achse (1) wie der Betätigungshebel (5) schwenkbaren Nocken (7), welcher durch eine vorgespannte Einrichtung elastisch am Hebel (5) in Anlage gehalten wird, wobei die Anlageflächen des Nockens (7) und des Hebels (5) komplementäre Erhebungen (22) aufweisen, die ringförmig um die Schwenkachse (1) verteilte Sägezähne bilden, welche für eine zuverlässige Kupplung des Nockens (7) mit dem Hebel (5), wenn dieser in dem die Spannung des Kabels (8) bewirkenden Sinne (A) schwenkt, geeignet sind, dadurch gekennzeichnet, dass, wobei das Kabel (8) tangential am Nocken (7) eingehängt ist, dieser elastisch in axialer Anlage am Hebel (5) mittels einer die Schwenkachse (1) umgebenden Feder gehalten wird, wobei von den Enden der Feder sich eines am feststehenden Träger (2) und das andere am Nocken (7) abstützt.

2. Vorrichtung nach Anspruch 1, dadurch gekennzeichnet, dass von den beiden Enden der Feder (17) eines (18) an einem feststehenden Träger (2) und das andere (19) am Nocken (7) so eingehängt ist, dass die Feder (17) letzteren in dem die Spannung des Kabels (8) bewirkenden Sinne zu drehen trachtet.

3. Vorrichtung nach Anspruch 1, dadurch gekennzeichnet, dass der Nocken (7) mit einem Loch versehen ist, welches das Einführen eines Dorns zum Bewirken einer Winkelversetzung des Nockens in eine Lage, in der das Kabel (8) gespannt ist, wenn der Hebel in Ruhestellung ist, gestattet.

## Claims

1. A device for controlling an element such as a vehicle parking brake, comprising an operating lever (5) which can pivot on a fixed pivot (1) and exerts in a pivoting direction (A) a pull on a cable (8) connected to the element to be actuated, and a cam (7) which is adapted to pivot around the same pivot (1) as the operating lever (5) and is retained bearing resiliently against the lever (5) via a prestressed member, the bearing faces of the cam (7) and the lever (5) being formed with complementary reliefs (22) forming saw teeth distributed in a circle around the pivot (1) and adapted to connect the cam (7) to the lever (5) positively when the lever (5) pivots in the direction (A) causing the tensioning of the cable (8), characterized in that the cable (8) is attached tangentially to the cam (7), which is retained bearing resiliently axially against the lever (5) by means of a spring enclosing the pivot (1), one of the ends of the spring bearing against the fixed support (2) and the other against the cam (7).

2. A device according to claim 1, characterized in that one (18) of the ends of the spring (17) is attached to a fixed support (2) and the other to the cam (7) in such a way that the spring (17) tends to rotate the cam (7) in the direction causing the tensioning of the cable (8).

3. A device according to claim 1, characterized in that the cam (7) is formed with a hole allowing the engagement of a spindle to produce an angular displacement of the cam into a position in which the cable (8) is tensioned when the lever is in the inoperative position.

FIG.1

FIG.2

016749